# EUROPÄISCHE PATENTSCHRIFT

(11) **EP 3 341 222 B1**
(45) Veröffentlichungstag und Bekanntmachung des Hinweises auf die Patenterteilung: **06.07.2022**
(21) Anmeldenummer: 16721826.2
(22) Anmeldetag: 12.05.2016
(51) Int. Cl.: B60C 11/24, B60C 19/00

(54) **VERFAHREN ZUM BESTIMMEN EINER PROFILTIEFE EINES REIFENPROFILS, SOWIE STEUERGERÄT HIERFÜR**
METHOD FOR DETERMINING A TREAD DEPTH OF A TYRE PROFILE AND CONTROL DEVICE THEREFORE
PROCÉDÉ POUR DÉTERMINER LA PROFONDEUR DE SCULPTURE D'UN PNEU, ET APPAREIL DE COMMANDE À CET EFFET

(30) Priorität: 25.08.2015 DE 102015216212
(43) Veröffentlichungstag der Anmeldung: 04.07.2018
(73) Patentinhaber: Continental Reifen Deutschland GmbH, 30165 Hannover (DE)
(72) Erfinder: CYLLIK, Adrian, 30159 Hannover (DE); HAHN, Carsten, 30880 Laatzen (DE); LEHN, Michael, 29221 Celle (DE); VOLK, Heiner, 31535 Neustadt (DE); WELSER, Joachim, 31535 Neustadt am Rbg. (DE); NEUBER, Cord-Christian, 31515 Wunstorf (DE); HUYNH, Jenny, 22457 Hamburg (DE)
(74) Vertreter: Continental Corporation
(86) Internationale Anmeldenummer: PCT/EP2016/060625
(87) Internationale Veröffentlichungsnummer: WO 2017/032467

(56) Entgegenhaltungen:
- EP-A1- 2 172 759
- JP-A- 2007 153 034
- JP-A- 2009 061 917
- JP-A- 2011 168 211

## Beschreibung

Die Erfindung betrifft ein Verfahren zum Bestimmen einer Profiltiefe eines Reifenprofils, sowie ein Steuergerät zur Durchführung des Verfahrens.

Es ist bekannt, an einer Reifeninnenseite eines Fahrzeugreifens ein Reifen-Sensor-Modul anzuordnen, das Kenngrößen des Fahrzeugreifens, beispielsweise einen Reifendruck oder eine Reifentemperatur bestimmen und über ein Funksignal an ein Steuergerät übermitteln kann. Weiterhin kann ein derartiges Reifen-Sensor-Modul auch eine Beschleunigung erfassen, wobei insbesondere eine Radialbeschleunigung der Reifeninnenseite ermittelt werden kann. Aus dieser Radialbeschleunigung können neben einem Bewegungszustand des Fahrzeugreifens auch Rückschlüsse auf eine Profiltiefe eines Reifenprofils des Fahrzeugreifens getroffen werden, indem der Verlauf der Radialbeschleunigung über einen Zeitraum oder über einen durchlaufenen Abrollumfang ausgewertet wird. Nachteilig bei bisherigen Auswertemethoden ist, dass die Bestimmung der Profiltiefe insbesondere bei einem abgefahrenen Fahrzeugreifen, d.h. bei einer geringen Profiltiefe sehr ungenau ist.

Ein gattungsgemäßes Verfahren zum Bestimmen einer Profiltiefe eines Reifenprofils ist beispielsweise in EP 2 172 759 A1 angegeben. Weiterhin sind derartige Verfahren aus JP 2011 168211 A, JP 2007 153034 A und JP 2009 061917 A bekannt.

Es ist daher Aufgabe der Erfindung, ein Verfahren zum Bestimmen einer Profiltiefe eines Reifenprofils anzugeben, mit dem die Profiltiefe eines abgefahrenen Fahrzeugreifens mit einer hohen Genauigkeit und einer hohen Zuverlässigkeit bestimmt werden kann. Weiterhin ist Aufgabe der Erfindung, ein Steuergerät zur Durchführung des Verfahrens bereitzustellen.

Diese Aufgabe wird durch ein Verfahren nach Anspruch 1 sowie ein Steuergerät nach Anspruch 18 gelöst. Die Unteransprüche geben bevorzugte Ausführungsformen an.

Erfindungsgemäß ist demnach vorgesehen, eine den Verlauf einer erfassten Beschleunigung charakterisierende analytische Kenngröße herzuleiten und der analytischen Kenngröße über eine Kalibrier-Kurve eine Profiltiefe zuzuordnen, wobei die Zuordnung vorzugsweise eindeutig ist, d.h. die Kalibrier-Kurve bildet die hergeleitete analytische Kenngröße eindeutig auf die Profiltiefe ab, so dass jedem Wert der analytischen Kenngröße genau ein Wert der Profiltiefe zugeordnet werden kann. Vorzugsweise kann auch eine eineindeutige Abbildung vorgesehen sein. Dadurch wird bereits der Vorteil erreicht, dass eine genaue Bestimmung der Profiltiefe vorzugsweise über den gesamten Bereich, insbesondere aber bei geringen Profiltiefen erfolgen kann. Denn der Verlauf der Kalibrier-Kurve erlaubt, die aus einer Messung hergeleitete analytische Kenngröße genau einer Profiltiefe zuzuordnen.

Zum Bestimmen der analytischen Kenngröße wird zunächst eine Beschleunigung eines Fahrzeugreifens an einem Messpunkt erfasst, wobei die Beschleunigung an einer Reifeninnenseite in einem Bereich, der einem Laufstreifen des Fahrzeugreifens vorzugsweise in einer Reifenmitte bzw. einem Reifenzenit gegenüberliegt, gemessen wird, so dass eine durch eine Verformung des Fahrzeugreifens während der Berührung mit einer Fahrbahn verursachte Änderung in der Beschleunigung des Messpunktes ermittelt werden kann. Dazu kann vorzugsweise ein Reifen-Sensor-Modul verwendet werden, das auf der Reifeninnenseite angeordnet oder in die Reifeninnenseite eingelassen ist, so dass die Beschleunigung des Fahrzeugreifens an einem Messpunkt am oder im Fahrzeugreifen erfasst werden kann.

Die Beschleunigung wird hierbei über einen Zeitraum gemessen, so dass zur Bestimmung der analytischen Kenngröße vorzugsweise eine Kennlinie über die Zeit gebildet werden kann, aus der aus analytischen Betrachtungen die analytische Kenngröße folgt. Die Kennlinie kann alternativ auch über den durchlaufenen Abrollumfang oder über den durchlaufenen Winkel des Reifen-Sensor-Moduls bzw. des Messpunktes bei einer Umdrehung des Reifens um einen bestimmten Winkel angegeben werden. Es ist aber alternativ auch möglich, die analytische Kenngröße beispielsweise in einer hardwareumgesetzten, elektronischen Schaltung direkt aus der erfassten Beschleunigung herzuleiten, indem beispielsweise Werte der erfassten Beschleunigung verglichen werden, ohne dabei auf eine Kennlinie zurückzugreifen.

Der betrachtete Zeitraum bzw. der durchlaufene Abrollumfang bzw. der durchlaufene Winkel sind derartig gewählt, dass zumindest eine Abweichung in der Beschleunigung an der Reifeninnenseite, die aufgrund der Berührung des Fahrzeugreifens mit der Fahrbahn und der dadurch verursachten Verformung des Fahrzeugreifens auftritt, durch den Messpunkt erfasst wird. Somit wird die Beschleunigung innerhalb eines Betrachtungsfensters erfasst, in dem ein Krümmungsradius der Reifeninnenseite eines sich drehenden Fahrzeugreifens durch die Berührung des Fahrzeugreifens mit der Fahrbahn von einem Krümmungsradius eines nicht verformten Fahrzeugreifens abweicht. Diese Abweichung im Krümmungsradius und somit der Beschleunigung tritt insbesondere ab einem Einlauf des Fahrzeugreifens in einen Reifenlatsch bis zu einem Auslauf des Fahrzeugreifens aus dem Reifenlatsch auf, wobei sich der Krümmungsradius auch in einem Übergangsbereich kurz vor dem Einlauf und kurz nach dem Auslauf, in dem der Fahrzeugreifen die Fahrbahn nicht berührt, ändert. Unter Reifenlatsch wird hierbei eine Bodenaufstandsfläche verstanden, so dass ein Bereich gewählt wird, der etwas größer als die Bodenaufstandsfläche ist. Der gesamte Bereich aus Reifenlatsch bzw. Bodenaufstandsfläche und Übergangsbereich wird im Folgenden als Reifenlatschbereich bezeichnet.

Das Betrachtungsfenster kann hierbei derartig gewählt werden, dass lediglich ein bestimmter Bereich der Abweichung in der Beschleunigung gemessen wird oder aber der gesamte Bereich der Abweichung über den gesamten Reifenlatschbereich.

Aus der erfassten Beschleunigung im Betrachtungsfenster wird durch analytische Betrachtungen eine den Verlauf der erfassten Beschleunigung charakterisierende analytische Kenngröße hergeleitet. Unter einer analytischen Kenngröße wird hierbei im Rahmen der Erfindung beispielsweise eine Änderung im Verlauf der erfassten Beschleunigung innerhalb des Reifenlatschbereiches und dabei vorzugsweise eine maximale, positive Änderung oder eine maximale, negative Änderung, d.h. in der Kennlinie eine maximale, positive Steigung bzw. eine maximale, negative Steigung - d.h. die mathematisch minimale Steigung - verstanden. Weiterhin kann als analytische Kenngröße eine maximale oder eine minimale Beschleunigung innerhalb des Reifenlatschbereiches, d.h. in der Kennlinie ein maximaler Ordinatenwert (Hochpunkt) oder ein minimaler Ordinatenwert (Tiefpunkt), aber auch ein zeitlicher Abstand oder ein Winkelabstand bzw. eine Wegdifferenz entlang des Abrollumfangs, d.h. ein vom Messpunkt zurückgelegter Winkel bzw. Weg auf dem Abrollumfang, d.h. in der Kennlinie ein x-Achsen-Abstand zwischen zwei Betrachtungspunkten verstanden werden.

Die analytische Kenngröße, die den Verlauf der erfassten Beschleunigung bzw. den Verlauf der Kennlinie charakterisiert, folgt somit erfindungsgemäß aus dem innerhalb eines Reifenlatschbereiches nicht-periodischen Verhalten der erfassten Beschleunigung, d.h. periodische Eigenschaften wie beispielsweise Eigenschwingungen, Oberschwingungen oder Störschwingungen bleiben bei der Berechnung der Profiltiefe gemäß der Erfindung unberücksichtigt.

Um eine mathematisch eindeutige Abbildung zu erhalten, verläuft die Kalibrier-Kurve, die der hergeleiteten analytischen Kenngröße eine Profiltiefe zuordnet, erfindungsgemäß monoton. Erfindungsgemäß ist hierbei eine lineare oder eine annähernd lineare Kalibrier-Kurve vorgesehen, die aus einer linearen Annäherung bzw. Interpolation von vorab bestimmten, diskreten Messwerten hervorgehen kann. Unter annähernd linear wird hierbei verstanden, dass die betrachtete Kalibrier-Kurve innerhalb eines Toleranzbandes um die lineare Annäherung der betrachteten Kalibrier-Kurve verläuft. Das Toleranzband entspricht hierbei einer Abweichung von weniger als 15%, vorzugsweise 5% von der linear angenäherten Kalibrier-Kurve nach oben und nach unten. Somit wird insbesondere auch eine sehr weit geöffnete Parabel oder ein schwach ansteigender exponentieller Verlauf erfasst, die jeweils linear angenähert werden können, ohne dass dabei eine Abweichung von mehr als 15%, vorzugsweise 5%, vom ursprünglichen Verlauf nach oben oder unten über den betrachteten Bereich der Profiltiefe folgt.

Abhängig von der Kalibrier-Kurve kann entweder eine absolute Profiltiefe oder aber eine Änderung der Profiltiefe ermittelt werden. Bei einer absoluten Bestimmung der Profiltiefe ist der genaue Verlauf der Kalibrier-Kurve, d.h. insbesondere deren Steigung und Schnittpunkt mit der y-Achse sowie ggf. einer Ausgangsprofiltiefe relevant, die beispielsweise bei einem Reifenwechsel auf einem Steuergerät oder dem Reifen-Sensor-Modul gespeichert werden kann, während zur Bestimmung der Änderung der Profiltiefe lediglich die Kenntnis der Steigung der Kalibrier-Kurve ausreicht.

Da eine lineare oder zumindest annähernd lineare Kalibrier-Kurve verwendet wird, kann die Profiltiefe im gesamten Bereich mit derselben Genauigkeit bestimmt werden. Somit ist vorteilhafterweise auch bei fast abgefahrenem Fahrzeugreifen eine Bestimmung der Profiltiefe mit hoher Genauigkeit möglich, da einer Änderung in der analytischen Kenngröße eine ausreichend auflösbare Änderung in der Profiltiefe zugeordnet werden kann, und zwar vorzugsweise über den gesamten Bereich der Profiltiefe, aber insbesondere bei sehr kleinen Profiltiefen, die beispielsweise aus sicherheitsrechtlichen Aspekten relevant sind. Somit kann eine profiltiefenabhängige Warnung bei fast abgefahrenem Reifen mit einer sehr hohen Genauigkeit und Zuverlässigkeit abgegeben werden.

Die jeweilige Kalibrier-Kurve kann vorzugsweise für jeden Reifentyp vorab bestimmt und vorzugsweise in einem Steuergerät eingespeichert werden, so dass nach der Bestimmung der analytischen Kenngröße vorzugsweise im Steuergerät eine Umrechnung auf die Profiltiefe stattfinden kann. Es ist aber auch möglich, die Kalibrier-Kurve erst während der Fahrt zu ermitteln.

Zur Bestimmung der analytischen Kenngröße können unterschiedliche Methoden zur Anwendung kommen, wobei jeder Methode vorzugsweise jeweils mindestens eine Kalibrier-Kurve zugrunde gelegt wird, aus der der Zusammenhang zwischen der ermittelten analytischen Kenngröße und der Profiltiefe folgt.

Gemäß einer ersten Ausführungsform bzw. Methode ist vorgesehen, den Verlauf einer erfassten Radialbeschleunigung zu betrachten, der vorzugsweise in einer Kennlinie angegeben werden kann, die die Radialbeschleunigung gemessen am Messpunkt aufgetragen über die Zeit oder den durchlaufenen Abrollumfang oder den durchlaufenen Winkel des Messpunktes angibt. In dem Verlauf der erfassten Radialbeschleunigung bzw. der diesen Verlauf charakterisierenden Kennlinie wird ein Betrachtungspunkt vorzugsweise auf den Punkt der Kennlinie mit der maximalen, positiven Steigung und/oder der maximalen, negativen Steigung innerhalb des Reifenlatschbereiches gelegt. Das Betrachtungsfenster wird in dem Fall also derartig gewählt, dass zumindest die innerhalb eines Reifenlatschbereiches maximale, positive Änderung und/oder die maximale, negative Änderung der Beschleunigung erfasst werden.

Die analytische Kenngröße folgt somit aus der Änderung der Beschleunigung bzw. der Steigung der Kennlinie am Betrachtungspunkt, d.h. vorzugsweise aus der maximalen, positiven Änderung der Radialbeschleunigung oder Steigung der Kennlinie bzw. aus der maximalen, negativen Änderung der Radialbeschleunigung oder Steigung der Kennlinie innerhalb des Reifenlatschbereiches. Um einen positiven Wert für die Profiltiefe zu erhalten, wird entweder der Betrag der Änderung der Radialbeschleunigung bzw. der Steigung der Kennlinie oder der Betrag der berechneten Profiltiefe betrachtet oder aber die Kalibrier-Kurve derartig gewählt, dass einer beispielsweise negativen Änderung der Radialbeschleunigung oder Steigung der Kennlinie ein positiver Wert für die Profiltiefe zugeordnet wird. Ob als Betrachtungspunkt der Punkt mit der maximalen, positiven oder der maximalen, negativen Änderung bzw. Steigung gewählt wird, kann beispielsweise abhängig von der Signalgüte oder aber dem Verlauf der Kalibrier-Kurve für einen bestimmten Reifentyp sein.

Zur Bestimmung der maximalen, positiven bzw. der maximalen, negativen Steigung kann vorteilhafterweise eine Ableitung, beispielsweise eine numerisch oder analytisch bestimmte Ableitung der Kennlinie nach der Zeit bzw. dem durchlaufenen Abrollumfang oder dem durchlaufenen Winkel gebildet werden. Aus dem Ordinatenwert des Hochpunktes bzw. des Tiefpunktes der Ableitung folgt der Wert der maximalen, positiven bzw. der maximalen, negativen Steigung der Kennlinie. Hierbei kann auch direkt aus der erfassten Radialbeschleunigung über beispielsweise elektronische Schaltungen die Ableitung bzw. die Änderung der Radialbeschleunigung analysiert werden, ohne dabei eine Kennlinie zu bilden.

Als analytische Kenngröße wird dem somit ermittelten Wert der maximalen, positiven bzw. der maximalen, negativen Steigung bzw. der Änderung der Radialbeschleunigung jeweils über eine vorzugsweise lineare oder annähernd lineare Kalibrier-Kurve eine Profiltiefe zugeordnet. D.h. für die maximale, positive und für die maximale, negative Steigung der Kennlinie bzw. Änderung der Radialbeschleunigung wird jeweils eine eigene Kalibrier-Kurve herangezogen, die beide vorzugsweise zumindest ein annähernd lineares Verhalten zeigen. Dabei kann der Verlauf der beiden jeweiligen Kalibrier-Kurven ggf. auch identisch sein.

Alternativ kann der Betrachtungspunkt auch derartig gewählt werden, dass nicht der Punkt der maximalen, negativen bzw. maximalen, positiven Änderung in der Radialbeschleunigung bzw. in der Steigung der Kennlinie betrachtet wird, sondern ein beliebiger anderer Punkt, der beispielsweise leicht versetzt zur maximalen, negativen bzw. maximalen, positiven Änderung bzw. Steigung liegt. In dem Fall sind dann bei der Zuordnung einer Profiltiefe ggf. weitere Einflüsse auf die Beschleunigung zu berücksichtigen, beispielsweise eine Radlast.

Gemäß einer zweiten Ausführungsform bzw. Methode wird eine Peakbreite eines Peaks in der Kennlinie, in der die Radialbeschleunigung des Messpunktes über die Zeit bzw. den durchlaufenen Abrollumfang oder den durchlaufenen Winkel des Messpunktes aufgetragen ist, betrachtet. Ein Peak ergibt sich innerhalb des Reifenlatschbereiches dadurch, dass die Radialbeschleunigung an den Messpunkten auf idealerweise Null abfällt, an denen der Fahrzeugreifen auf der Fahrbahn aufliegt und somit in etwa parallel zur Fahrbahn verläuft. Der Peakbreite des Peaks als analytische Kenngröße kann über eine dieser Methode zugewiesenen, vorzugsweise linear oder annähernd linear verlaufenden Kalibrier-Kurve eine Profiltiefe zugeordnet werden.

Die Peakbreite kann bestimmt werden, indem ein Betrachtungspunkt auf einer abfallenden Flanke des Peaks und ein weiterer Betrachtungspunkt auf einer ansteigenden Flanke des Peaks gewählt wird. Aus der Differenz der Abszissenwerte (x-Werte) beider Betrachtungspunkte folgt unmittelbar die Peakbreite, wobei für beide Betrachtungspunkte derselbe Ordinatenwert (y-Wert) gewählt wird. Die analytische Kenngröße ist somit gemäß dieser zweiten Ausführungsform der x-Achsen-Abstand zwischen zwei Betrachtungspunkten, der einem zeitlichen Abstand oder einem Winkelabstand bzw. einer Wegdifferenz entlang des Abrollumfangs zwischen zwei Beschleunigungszuständen entspricht, wobei die Radialbeschleunigung an beiden Beschleunigungszuständen in etwa identisch ist. Das Betrachtungsfenster wird somit gemäß dieser Methode derartig gewählt, dass in der Kennlinie zumindest der durch die abfallende Radialbeschleunigung und die ansteigende Radialbeschleunigung gebildete Peak innerhalb eines Reifenlatschbereiches erfasst wird.

Die beiden Betrachtungspunkte werden vorteilhafterweise derartig gewählt, dass beide Ordinatenwerte auf einer Peakhöhe von weniger als ca. 25%, vorzugsweise zwischen 5% und 10%, oder von mehr als ca. 75%, vorzugsweise 100% liegen, wobei die Peakhöhe aus einem über mehrere Reifenumdrehungen gewichtet gemittelten und/oder einem nach dem Prinzip des gleitenden Mittelwertes geglätteten Verlauf der erfassten Radialbeschleunigung bestimmt wird, so dass Eigenschwingungen oder Rauschsignale bei der Festlegung der Peakhöhe keinen wesentlichen Einfluss haben. D.h. die Radialbeschleunigung an den Betrachtungspunkten entspricht weniger als 25%, vorzugsweise zwischen 5% und 10%, oder mehr als 75%, vorzugsweise 100% der Radialbeschleunigung am Hochpunkt der Kennlinie. In diesen Bereichen ändert sich die Peakbreite in Abhängigkeit der Profiltiefe am signifikantesten, so dass die Bestimmung der Profiltiefe in diesen Bereichen und für diese zweite Methode am genausten ist. Hierbei kann sich je nach Ordinatenwert der ' Betrachtungspunkte die Abhängigkeit der Profiltiefe von der Peakbreite ändern, so dass je nach Wahl des Betrachtungspunktes eine entsprechende vom Ordinatenwert abhängige Kalibrier-Kurve zu wählen ist.

Gemäß einer dritten Ausführungsform bzw. Methode wird die Tangentialbeschleunigung betrachtet. Die Kennlinie gibt somit die Tangentialbeschleunigung des Messpunktes über die Zeit bzw. über den durchlaufenen Abrollumfang oder den durchlaufenen Winkel des Messpunktes an. Innerhalb eines Reifenlatschbereiches durchläuft die Tangentialbeschleunigung zumindest einen Hochpunkt, einen Nulldurchgang sowie einen Tiefpunkt, wobei sowohl dem Ordinatenwert am Hochpunkt als auch dem Ordinatenwert am Tiefpunkt über eine jeweilige Kalibrier-Kurve eine Profiltiefe zugeordnet werden kann.

D.h. gemäß dieser Ausführungsform wird als Betrachtungspunkt der Hochpunkt und/oder der Tiefpunkt der Kennlinie gewählt, wobei der Hochpunkt und/oder der Tiefpunkt vorzugsweise aus einem über mehrere Reifenumdrehungen gewichtet gemittelten und/oder einem nach dem Prinzip des gleitenden Mittelwertes geglätteten Verlauf der erfassten Tangentialbeschleunigung bestimmt werden, so dass Eigenschwingungen oder Rauschsignale bei der Festlegung des Hochpunktes und/oder des Tiefpunktes keinen wesentlichen Einfluss haben. Die analytische Kenngröße folgt somit gemäß dieser dritten Ausführungsform aus dem Ordinatenwert der Betrachtungspunkte, d.h. dem maximalen Ordinatenwert (am Hochpunkt) bzw. dem minimalen Ordinatenwert (am Tiefpunkt) der Kennlinie innerhalb des Reifenlatschbereiches. Aus dem maximalen Ordinatenwert oder dem minimalen Ordinatenwert kann über die jeweilige Kalibrier-Kurve für die dritte Ausführungsform eine Profiltiefe berechnet werden, wobei eine Kalibrier-Kurve für den Ordinatenwert des Hochpunktes und eine weitere Kalibrier-Kurve des minimalen Ordinatenwertes am Tiefpunkt heranzogen werden. Dabei kann der Verlauf und somit die Steigung der beiden jeweiligen Kalibrier-Kurven ggf. identisch sein. Um einen positiven Wert für die Profiltiefe zu erhalten, wird entweder der Betrag des minimalen Ordinatenwertes oder der Betrag der berechneten Profiltiefe betrachtet oder aber die Kalibrier-Kurve derartig gewählt, dass einem negativen minimalen Ordinatenwert am Tiefpunkt ein positiver Wert für die Profiltiefe zugeordnet wird.

Alternativ kann auch ohne das Bilden einer Kennlinie aus der erfassten Tangentialbeschleunigung direkt eine maximale bzw. minimale Tangentialbeschleunigung innerhalb des Reifenlatschbereiches beispielsweise mit Hilfe von elektrischen Schaltungen ermittelt werden, aus der dann über die Kalibrier-Kurve die Profiltiefe folgt.

Das Betrachtungsfenster wird somit derartig gewählt, dass in der Kennlinie zumindest die innerhalb eines Reifenlatschbereicheses maximale und/oder minimale Tangentialbeschleunigung erfasst wird.

Vorteilhafterweise können auch alle drei Methoden parallel durchgeführt werden, um beispielsweise die mit einer Methode bestimmte Profiltiefe zu plausibilisieren oder einen gewichteten Mittelwert aus mit unterschiedlichen Methoden berechneten Profiltiefen bilden zu können.

In allen drei Ausführungsformen kann der Verlauf der erfassten Beschleunigung bzw. die Kennlinie vorteilhafterweise gewichtet gemittelt werden. D.h. es werden Verläufe bzw. Kennlinien über mehrere, beispielsweise zwischen 10 und 10000 Reifenumdrehungen, aufgenommen und gewichtet gemittelt. Aus dem gemittelten Verlauf bzw. der gemittelten Kennlinie werden dann der Methode entsprechend die analytischen Kenngrößen bestimmt. Dadurch können vorteilhafterweise Rauschsignale oder Unregelmäßigkeiten während eines Reifenumlaufes, die das Signal verfälschen, ausgeglichen werden; die Signalgüte und somit die Genauigkeit bei der Bestimmung der Profiltiefe über die jeweilige Kalibrier-Kurve steigt. Ergänzend oder alternativ kann eine Glättung, beispielsweise ein gleitender Mittelwert angewandt werden, um analog zu einem Tiefpassfilter höhere Frequenzanteile abschneiden zu können. Dadurch kann vorteilhafterweise die Signalgüte weiter verbessert werden, so dass eine Bestimmung der Profiltiefe genauer wird.

Vorteilhafterweise kann weiterhin vorgesehen sein, dass bei der Bestimmung der Profiltiefe gemäß der ersten bzw. der dritten Ausführungsform jeweils die maximale, negative Änderung/Steigung sowie die maximale, positive Änderung/Steigung bzw. die maximale Tangentialbeschleunigung (Hochpunkt) und die minimale Tangentialbeschleunigung (Tiefpunkt) betrachtet werden. Daraus wird anschließend jeweils ein betragsmäßiger gewichteter Mittelwert gebildet, aus dem dann über eine weitere, beispielsweise gemittelte Kalibrier-Kurve die Profiltiefe folgt. Dadurch können systematische Fehler, die an dem jeweiligen Extrempunkt vorhanden sein können, bei der Auswertung vermieden werden.

Vorzugsweise findet die Auswertung der analytischen Kenngrößen und somit die Bestimmung der Profiltiefe gemäß den drei Ausführungsbeispielen außerhalb des Reifen-Sensor-Moduls statt. Das Reifen-Sensor-Modul sendet dazu lediglich die ermittelten analytischen Kenngrößen, die im Reifen-Sensor-Modul anhand der gemessenen Beschleunigungswerte, d.h. insbesondere der Tangentialbeschleunigung und/oder der Radialbeschleunigung bestimmt werden, an das Steuergerät, auf dem dann die Umrechnungen über die Kalibrier-Kurven gemäß den drei Ausführungsformen stattfinden, beispielsweise über eine entsprechende Software. Das Bestimmen von Hoch- und Tiefpunkten, Abständen oder Steigungen bzw. Änderungen erfolgt hierbei durch einfache Software- oder hardwareumgesetzte Rechenoperationen auf dem Reifen-Sensor-Modul.

Um Ressourcen zu sparen, wird die Beschleunigung vorteilhafterweise lediglich über den Zeitraum bzw. das Betrachtungsfenster erfasst und im Reifen-Sensor-Modul verarbeitet, das für die jeweilige Methode relevant ist. Dadurch kann die Berechnung auf dem Reifen-Sensor-Modul effizienter durchgeführt werden, da die Beschleunigung außerhalb des Betrachtungsfensters keinen Einfluss auf die Berechnung der analytischen Kenngrößen bzw. auf die Profiltiefe hat.

Vorteilhafterweise können weiterhin eine Reifentemperatur, ein Reifendruck, eine Radlast und/oder eine Radgeschwindigkeit berücksichtigt werden, die an das Steuergerät übermittelt oder auf diesem bestimmt werden können. Diese Faktoren haben zumindest einen geringen Einfluss auf die in den einzelnen Ausführungsformen verwendeten Beschleunigungen und somit auf den Verlauf der Kennlinien und können ebenfalls anhand der vom Reifen-Sensor-Modul übermittelten Signale bestimmt werden. Das Steuergerät kann den Einfluss dieser Faktoren geeignet kompensiert, um eine genauere Bestimmung der Profiltiefe zu ermöglichen.

Anhand von Ausführungsbeispielen soll die Erfindung im Folgenden näher erläutert werden. Es zeigen:
- Fig. 1: ein Fahrzeugreifen mit einem Reifen-Sensor-Modul;
- Fig. 2: eine Kennlinie für eine Radialbeschleunigung;
- Fig. 2a: eine Ableitung der Kennlinie gemäß Fig. 2 zur Bestimmung einer Profiltiefe gemäß einer ersten Ausführungsform;
- Fig. 2b: einen Ausschnitt der Kennlinie gemäß Fig. 2 zur Bestimmung einer Profiltiefe gemäß einer zweiten Ausführungsform;
- Fig. 3: eine Kennlinie für eine Tangentialbeschleunigung zur Bestimmung einer Profiltiefe gemäß einer dritten Ausführungsform; und
- Fig. 4: eine Kalibrier-Kurve zur Bestimmung der Profiltiefe gemäß der ersten Ausführungsform.

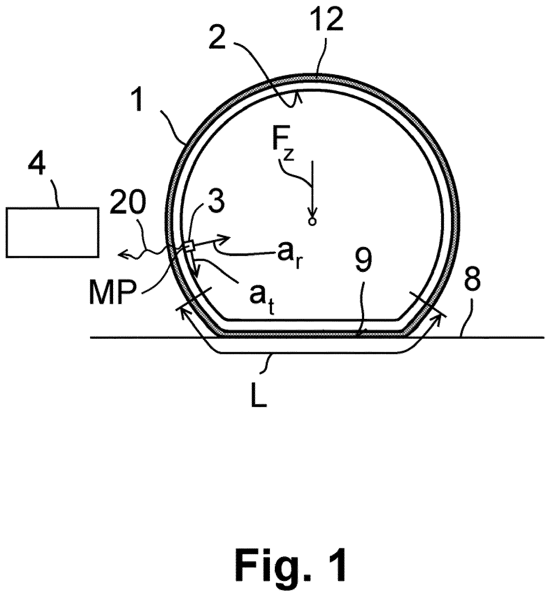

In Figur 1 ist ein Fahrzeugreifen 1 dargestellt, an dessen Reifeninnenseite 2 ein Reifen-Sensor-Modul 3 angeordnet ist. Das Reifen-Sensor-Modul 3 ist derartig angeordnet, dass über das Reifen-Sensor-Modul 3 insbesondere eine durch eine Verformung des Fahrzeugreifens 1 beeinflusste Beschleunigung eines Messpunktes MP bestimmt werden kann. Die Beschleunigung kann insbesondere eine Radialbeschleunigung aᵣ oder eine Tangentialbeschleunigung at des Messpunktes MP sein. Das Reifen-Sensor-Modul 3 kann insbesondere analytische Kenngrößen, die aus der gemessenen Beschleunigung a_{r,} at hergeleitet werden können, beispielsweise über ein Funksignal 20 an ein Steuergerät 4 übermitteln, das die Funksignale 20 entsprechend weiterverarbeiten kann.

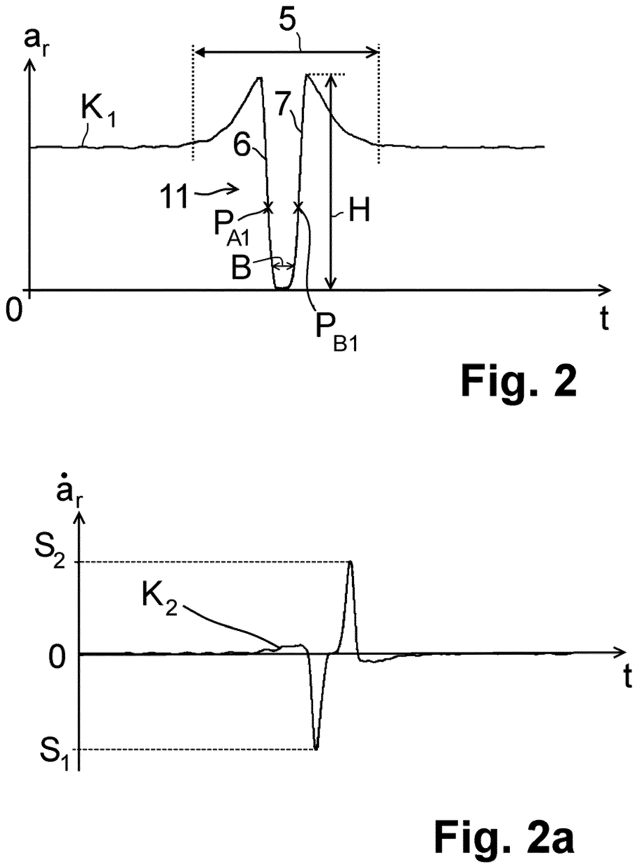

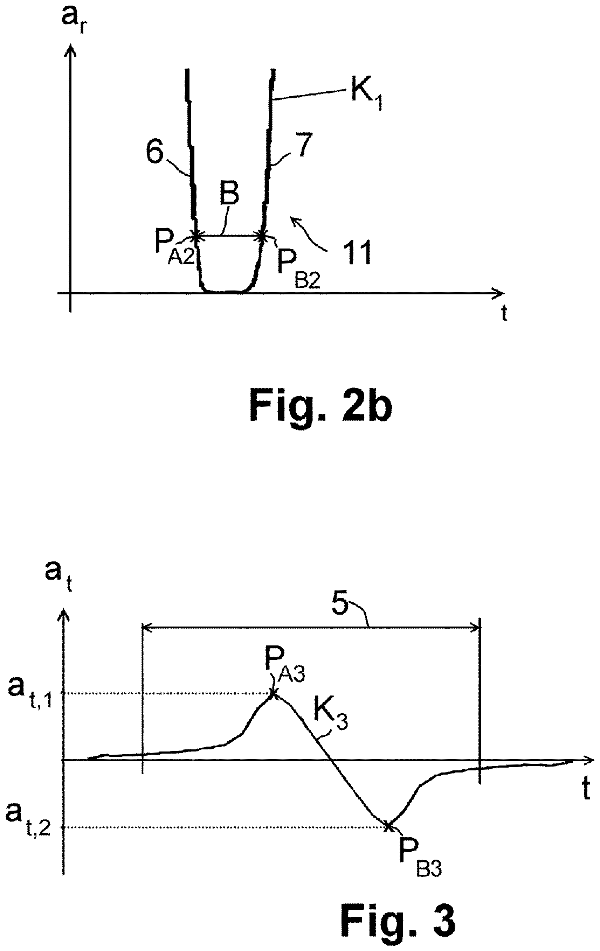

Gemäß einer ersten und zweiten Ausführungsform, die in den Figuren 2, 2a und 2b gezeigt ist, wird zunächst die Radialbeschleunigung aᵣ betrachtet. In Fig. 2 ist dazu beispielhaft eine Kennlinie K₁ dargestellt, in der die vom Reifen-Sensor-Modul 3 gemessene Radialbeschleunigung aᵣ über die Zeit t dargestellt ist. Außerhalb eines Betrachtungsfensters 5 ist die Radialbeschleunigung aᵣ in etwa konstant. Innerhalb des Betrachtungsfenster 5 steigt die Radialbeschleunigung aᵣ zunächst auf einen Hochpunkt an, weist dann eine abfallende Flanke 6 auf, die im Folgenden in etwa auf Null abfällt und anschließend in eine ansteigende Flanke 7 übergeht, die bis zu einem zweiten Hochpunkt ansteigt. Für größere Zeiten t fällt die Radialbeschleunigung aᵣ wieder auf einen konstanten Wert außerhalb des Betrachtungsfensters 5 ab, wobei der genaue Verlauf abhängig von der Orientierung des Reifen-Sensor-Moduls 3 innerhalb des Fahrzeugreifens 1 ist. Das Betrachtungsfenster 5 entspricht somit gemäß diesem Beispiel einem Reifenlatschbereich L, in dem sich eine Krümmung der Reifeninnenseite 2 aufgrund der Verformung des Fahrzeugreifens 1 verändert, so dass sich auch die Radialbeschleunigung aᵣ betrachtet an der Reifeninnenseite 2 ändert.

Die Radialbeschleunigung aᵣ wird dann minimal, d.h. idealerweise Null, wenn sich der Messpunkt MP im Bereich einer Bodenaufstandsfläche 9 des Fahrzeugreifens 1 befindet, innerhalb derer der Fahrzeugreifen 1 eine Fahrbahn 8 berührt. Der Fahrzeugreifen 1 verformt sich im Bereich der Bodenaufstandsfläche 9 derartig, dass die Reifeninnenseite 2 in einem Bereich, der einem auf der Fahrbahn 8 aufliegenden Laufstreifen 12 des Fahrzeugreifens 1 gegenüberliegt, idealerweise parallel zur Fahrbahn 8 verläuft; die Radialbeschleunigung aᵣ wird somit an diesen Punkten idealerweise Null.

Gemäß einer ersten Ausführungsform wird zum Bestimmen einer Profiltiefe D des Fahrzeugreifens 1 zunächst eine maximale, negative Steigung S₁ und/oder eine maximale, positive Steigung S₂ der Kennlinie K₁ innerhalb des Betrachtungsfensters 5 bestimmt, wobei die maximale, negative Steigung S₁ der abfallenden Flanke 6 und die maximale, positive Steigung S₂ der ansteigenden Flanke 7 zugeordnet ist. Dazu kann vorzugsweise eine Ableitung K₂ der Kennlinie K₁ nach der Zeit t gebildet werden, die in Fig. 2a dargestellt ist. Die maximale, negative Steigung S₁ bzw. die maximale, positive Steigung S₂ folgen dann aus einem Ordinatenwert (y-Wert) eines Tiefpunktes bzw. eines Hochpunktes der Ableitung K₂.

Zur weiteren Auswertung wird als ein erster Betrachtungspunkt P_{A1} der Punkt der Kennlinie K₁, dem in der Ableitung K₂ der niedrigste Ordinatenwert zugeordnet ist und/oder als ein zweiter Betrachtungspunkt P_{B1} der Punkt der Kennlinie K₁, dem in der Ableitung K₂ der höchste Ordinatenwert zugeordnet ist, gewählt. Als analytische Kenngrößen werden die Steigungen S₁ bzw. S₂ des ersten Betrachtungspunktes P_{A1} bzw. des zweiten Betrachtungspunktes P_{B2} anschließend vom Reifen-Sensor-Modul 3 über das Funksignal 20 an das Steuergerät 4 übertragen und im Steuergerät 4 über lineare oder annähernd lineare Kalibrier-Kurven 10a, 10b in die Profiltiefe D umgerechnet, wobei gemäß diesem Beispiel der Betrag der Steigung S₁ betrachtet wird, um einen positiven Wert für die Profiltiefe D zu erhalten.

Alternativ kann auch eine maximale, positive oder eine maximale, negative Änderung S₁, S₂ im Verlauf der erfassten Radialbeschleunigung aᵣ bestimmt werden, die der Steigung S₁, S₂ der Kennlinie K₁ an den entsprechenden Punkten entspricht, ohne dass eine Kennlinie K₁ und eine Ableitung K₂ gebildet wird, beispielsweise über eine elektronische Schaltung, die aufeinanderfolgende Radialbeschleunigungen aᵣ in einem Intervall vergleicht. Aus der Änderung S₁, S₂ folgt über die Kalibrier-Kurve 10a, 10b ebenfalls die Profiltiefe D.

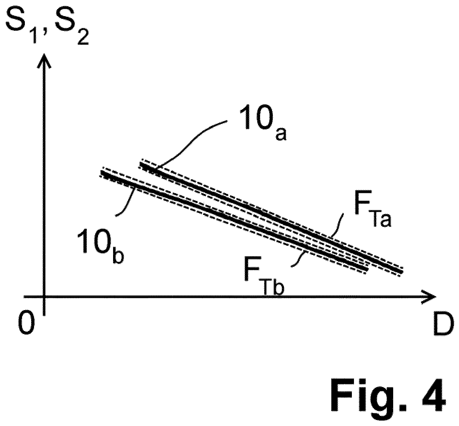

Für verschiedene Reifentypen können im Steuergerät 4 Kalibrier-Kurven 10a, 10b eingespeichert sein, wobei für jede analytische Kenngröße S₁, S₂ eine Kalibrier-Kurve 10a, 10b hinterlegt ist, d.h. für die Steigung S₁ am ersten Betrachtungspunkt P_{A1} ist eine Kalibrier-Kurve 10a vorgesehen und für die Steigung S₂ am zweiten Betrachtungspunkt P_{B1} eine Kalibrier-Kurve 10b; beispielhafte Kalibrier-Kurven 10a, 10b sind in Fig. 4 dargestellt. Die Kalibrier-Kurven 10a, 10b ordnen hierbei der hergeleiteten analytischen Kenngröße, d.h. den Steigungen S₁ und S₂ jeweils in eindeutiger Weise eine Profiltiefe D zu, wobei gilt: D = Fₐ x S₁ + Cₐ. bzw. D = Fb x S₂ + C_{b}, wobei die Faktoren Fa bzw. F_{b} die Steigung der jeweiligen innerhalb eines Toleranzfensters F_{Ta} bzw. F_{Tb} liegenden Kalibrier-Kurve 10a bzw. 10b angeben und Cₐ bzw. C_{b} vom Reifentyp abhängige Konstanten sind.

Um Messungenauigkeiten zu vermeiden, kann auch ein Mittelwert aus dem Betrag des Ordinatenwertes S₁ am Tiefpunkt der Ableitung K₂ und dem Ordinatenwert S₂ am Hochpunkt der Ableitung K₂ sowie der Faktoren Fₐ, F_{b}, Cₐ, C_{b} ermittelt werden, wobei gilt: D = (Fₐ x |S₁| + F_{b} x S₂)/2 + (Cₐ+C_{b})/2.

Gemäß einer zweiten Ausführungsform wird der aus der abfallenden Flanke 6 und der ansteigenden Flanke 7 gebildete Peak 11 betrachtet, wobei aus einer Peakbreite B des Peaks 11, die in Fig. 2b dargestellt ist, die Profiltiefe D unter Verwendung einer für dieses Ausführungsbeispiel gespeicherten Kalibrier-Kurve 10c folgt. Die Peakbreite B wird gemäß diesem Ausführungsbeispiel auf einer Höhe von ca. 5% der Peakhöhe H bestimmt, wobei die Peakhöhe aus einem über mehrere Reifenumdrehungen gewichtet gemittelten und/oder einem nach dem Prinzip des gleitenden Mittelwertes geglätteten Verlauf der erfassten Radialbeschleunigung bestimmt wird, so dass Eigenschwingungen oder Rauschsignale bei der Festlegung der Peakhöhe von 5% keinen wesentlichen Einfluss haben. Das bedeutet, es wird ein x-Achsen-Abstand, d.h. ein zeitlicher Abstand, zwischen einem ersten Betrachtungspunkt P_{A2} und einem zweiten Betrachtungspunkt P_{B2} gebildet, wobei die Ordinatenwerte beider Betrachtungspunkte P_{A2}, P_{B2} einem Wert entsprechen, der in etwa 5% der Peakhöhe H entspricht; d.h. die Radialbeschleunigung aᵣ ist an diesen Punkten auf ca. 5% der Radialbeschleunigung aᵣ an den Hochpunkten der Kennlinie K₁ abgefallen. Aus der Peakbreite B folgt die Profiltiefe D aus: D = F_{c} x B + C_{c}, wobei der Faktor F_{c} die Steigung der innerhalb eines Toleranzfensters F_{Tc} liegenden Kalibrier-Kurve 10c angibt und C_{c} eine reifentypische Konstante angibt. D.h. die Kalibrier-Kurve 10c ordnet der Peakbreite B in eindeutiger Weise eine Profiltiefe D zu

Gemäß einer dritten Ausführungsform, die in Fig. 3 dargestellt ist, wird die Tangentialbeschleunigung at über die Zeit t betrachtet und als Kennlinie K₃ aufgetragen. Diese durchläuft innerhalb des Betrachtungsfensters 5 zunächst einen Hochpunkt, hat einen Nulldurchgang und geht in einen Tiefpunkt über, wobei der genaue Verlauf abhängig von der Orientierung des Reifen-Sensor-Moduls 3 relativ zur Drehrichtung des Fahrzeugreifens 1 ist. Zur Bestimmung der Profiltiefe D wird als ein erster Betrachtungspunkt P_{A3} zunächst der Punkt mit der höchsten Tangentialbeschleunigung a_{t,1} gewählt, also der Hochpunkt der Kennlinie K₃ und als ein zweiter Betrachtungspunkt P_{B3} der Punkt mit der niedrigsten Tangentialbeschleunigung a_{t,2}, d.h. der Tiefpunkt der Kennlinie K₃, wobei der Hochpunkt und der Tiefpunkt aus einem über mehrere Reifenumdrehungen gewichtet gemittelten und/oder einem nach dem Prinzip des gleitenden Mittelwertes geglätteten Verlauf der erfassten Tangentialbeschleunigung at bestimmt werden, so dass Eigenschwingungen oder Rauschsignale bei der Festlegung des Hochpunktes und/oder des Tiefpunktes keinen wesentlichen Einfluss haben. Dem Ordinatenwert des ersten Betrachtungspunktes P_{A3} sowie der Betrag des Ordinatenwertes des zweiten Betrachtungspuntkes P_{B3} kann in eindeutiger Weise durch die Kalibrier-Kurve 10d, 10e eine Profiltiefe D zugeordnet werden, so dass gilt: D = F_{d} x a_{t,1} + C_{d} bzw. D = Fe x a_{t,2} + C_{e,} wobei F_{d} und Fe die Steigungen von für diese dritte Ausführungsform bereitgestellten, innerhalb des Toleranzfensters F_{Td}, F_{Te} liegenden Kalibrier-Kurven 10d, 10e für die Tangentialbeschleunigung at angeben und C_{d} und Cₑ reifentypische Konstanten sind.

Alternativ kann auch eine maximale und/oder eine minimale Tangentialbeschleunigung a_{t,1}, a_{t,2} direkt aus der erfassten Tangentialbeschleunigung at bestimmt werden, ohne dass eine Kennlinie K₃ gebildet wird, beispielsweise durch eine elektronische Schaltung, die mehrere aufeinanderfolgende Tangentialbeschleunigungen at vergleicht. Aus der maximalen und/oder minimalen Tangentialbeschleunigung a_{t,1}, a_{t,2} folgt über die Kalibrier-Kurve 10d, 10e ebenfalls die Profiltiefe D.

Alternativ kann als ein erster Betrachtungspunkt P_{A3} der Hochpunkt und als zweiter Betrachtungspunkt P_{B3} der Tiefpunkt der Kennlinie K₃ gewählt und ein betragsmäßiger Mittelwert aus beiden Ordinatenwerten gebildet werden, aus denen die Profiltiefe D folgt, d.h. D = (F_{d} x a_{t,1} + Fₑx |a_{t,2}|)/2 + (C_{d}+Cₑ)/2.

Um die Signalgüte zu verbessern, kann zusätzlich vorgesehen sein, die Kennlinien K₁, K₃ über mehrere Umdrehungen des Fahrzeugreifens 1 gewichtet zu mitteln. In dem Fall wird dasselbe Betrachtungsfenster 5 über beispielsweise zehn Umdrehungen gewichtet gemittelt und aus der gemittelten Kennlinie K₁, K₃ gemäß dem entsprechenden Ausführungsbeispiel die Profiltiefe D bestimmt. Dadurch können insbesondere ein Rauschen sowie Unregelmäßigkeiten im Signalverlauf unterdrückt werden. Zusätzlich kann auch ein gleitender Mittelwert zum Glätten der Kennlinien K₁, K₃ angewandt werden.

Ergänzend können zur Verbesserung der Genauigkeit weitere Einflüsse auf die Kennlinien K₁, K₃ kompensiert werden. So haben beispielsweise ein Reifendruck p, eine Reifentemperatur T_{R}, eine Radgeschwindigkeit v_{R} sowie eine auf den Fahrzeugreifen 1 wirkende Radlast F_{z} Einflüsse auf die Radialbeschleunigung aᵣ und die Tangentialbeschleunigung at. Diese können bei Kenntnis der jeweiligen Einflussgrößen vom Steuergerät 4 kompensiert werden, über im Steuergerät 4 hinterlegten Abhängigkeiten, die den Einfluss des Reifendruckes p, der Reifentemperatur T_{R}, der Radgeschwindigkeit v_{R} und der Radlast F_{z} beschreiben.

### Bezugszeichenliste

- 1: Fahrzeugreifen
- 2: Reifeninnenseite
- 3: Reifen-Sensor-Modul
- 4: Steuergerät
- 5: Betrachtungsfenster
- 6: abfallende Flanke
- 7: ansteigende Flanke
- 8: Fahrbahn
- 9: Bodenaufstandsfläche
- 10a, 10b, 10c, 10d, 10e: Kalibrier-Kurve
- 11: Peak
- 12: Laufstreifen
- 20: Funksignal

- aᵣ: Radialbeschleunigung
- aₜ: Tangentialbeschleunigung
- a_{t,1}: minimale Tangentialbeschleunigung
- a_{t,2}: maximale Tangentialbeschleunigung
- B: Peakbreite/zeitlicher Abstand/Winkelabstand/Wegdifferenz
- C_{a,} C_{b}, C_{c}, C_{d}, Cₑ: reifencharakteristische Konstanten
- D: Profiltiefe
- Fₐ, F_{b}, F_{c},F_{d}, Fₑ: Steigung von 10a, 10b, 10c, 10d, 10e
- FTa, F_{Tb}, F_{Tc}, F_{Td}, F_{Te}: Toleranzband von 10a, 10b, 10c, 10d, 10e
- F_{z}: Radlast
- H: Peakhöhe
- K₁, K₃: Kennlinie
- K2: Ableitung von K₁
- L: Reifenlatschbereich
- MP: Messpunkt
- p: Reifendruck
- P_{A1,2,3}, P_{B1,2,3}: Betrachtungspunkt
- S₁/ S₂: Änderung bzw. Steigung der Radialbeschleunigung an der abfallenden/ansteigenden Flanke 6/7
- t: Zeit
- T_{R}: Reifentemperatur
- v_{R}: Radgeschwindigkeit

## Patentansprüche

1. Verfahren zum Bestimmen einer Profiltiefe (D) eines Reifenprofils, mit mindestens den folgenden Schritten:
a) Erfassen einer Beschleunigung (a_{r,} aₜ) eines Messpunktes (MP) an einer Reifeninnenseite (2) eines Fahrzeugreifens (1), wobei eine durch eine Berührung des Fahrzeugreifens (1) mit einer Fahrbahn (8) verursachte Abweichung der Beschleunigung (a_{r,} aₜ) des Messpunktes (MP) innerhalb eines Betrachtungsfensters (5) erfasst wird,
b) Herleiten mindestens einer den Verlauf der erfassten Beschleunigung (a_{r,} aₜ) charakterisierenden analytische Kenngröße (S₁, S₂, a_{t,1}, a_{t,2}, B), wobei die mindestens eine analytische Kenngröße (S₁, S₂, a_{t,1}, a_{t,2}, B) den innerhalb einer Reifenumdrehung nicht-periodischen Verlauf der erfassten Beschleunigung (a_{r,} aₜ) charakterisiert,
c) Bestimmen der Profiltiefe (D) in Abhängigkeit der mindestens einen analytischen Kenngröße (S₁, S₂, a_{t,1}, a_{t,2}, B), wobei die Abhängigkeit zwischen der analytischen Kenngröße (S₁, S₂, a_{t,1}, a_{t,2}, B) und der Profitiefe (D) aus einer Kalibrier-Kurve (10a, 10b, 10c, 10d, 10e) folgt und die Kalibrier-Kurve (10a, 10b, 10c, 10d, 10e) der hergeleiteten analytischen Kenngröße (S₁, S₂, a_{t,1}, a_{t,2}, B) eine Profiltiefe (D) zuordnet, **dadurch gekennzeichnet, dass**
zur Bestimmung der Profiltiefe (D) eine Kalibrier-Kurve (10a, 10b, 10c, 10d, 10e) verwendet wird, die innerhalb eines linearen Toleranzbandes (F_{Ta}, F_{Tb}, F_{Tc}, F_{Td}, F_{Te}) verläuft, wobei das Toleranzband (F_{Ta}, F_{Tb}, F_{Tc}, F_{Td}, F_{Te}) mit einer Abweichung von weniger als 15% um eine lineare Annäherung der Kalibrier-Kurve (10a, 10b, 10c, 10d, 10e) verläuft,
wobei eine monotone Kalibrier-Kurve (10a, 10b, 10c, 10d, 10e) verwendet wird, die linear verläuft, wobei die Profiltiefe (D) aus einer Multiplikation der mindestens einen analytischen Kenngröße (S₁, S₂, a_{t,1}, a_{t,2}, B) mit einer Steigung (Fₐ, F_{b}, F_{c}, F_{d}, Fₑ) der Kalibrier-Kurve (10a, 10b, 10c, 10d, 10e) unter Berücksichtigung einer reifencharakteristischen Konstante (Cₐ, C_{b}, C_{c}, C_{d}, Cₑ) bestimmt wird.

2. Verfahren nach Anspruch 1, **dadurch gekennzeichnet, dass** zur Bestimmung der Profiltiefe (D) eine Kalibrier-Kurve (10a, 10b, 10c, 10d, 10e) verwendet wird, die die analytische Kenngröße (S₁, S₂, a_{t,1}, a_{t,2}, B) eindeutig auf die Profiltiefe (D) abbildet, so dass jedem Wert der mindestens einen analytischen Kenngröße (S₁, S₂, a_{t,1}, a_{t,2}, B) genau ein Wert der Profiltiefe (D) zugeordnet wird.

3. Verfahren nach Anspruch 1 oder 2, **dadurch gekennzeichnet, dass** zur Bestimmung der Profiltiefe (D) eine Kalibrier-Kurve (10a, 10b, 10c, 10d, 10e) verwendet wird, die innerhalb eines linearen Toleranzbandes (F_{Ta}, F_{Tb}, F_{Tc}, F_{Td}, F_{Te}) verläuft, wobei das Toleranzband (F_{Ta}, F_{Tb}, F_{Tc}, F_{Td}, F_{Te}) mit einer Abweichung von weniger als 5% um eine lineare Annäherung der Kalibrier-Kurve (10a, 10b, 10c, 10d, 10e) verläuft.

4. Verfahren nach einem der vorhergehenden Ansprüche, **dadurch gekennzeichnet, dass** jeder analytischen Kenngröße (S₁, S₂, a_{t,1}, a_{t,2}, B) jeweils eine Kalibrier-Kurve (10a, 10b, 10c, 10d, 10e) zugeordnet wird.

5. Verfahren nach einem der vorhergehenden Ansprüche, **dadurch gekennzeichnet, dass** die mindestens eine analytische Kenngröße aus einer Änderung (S₁, S₂) einer Radialbeschleunigung (aᵣ) über eine Zeit (t) oder den durchlaufenen Abrollumfang oder einen durchlaufenen Winkel des Messpunktes (MP) auf dem Fahrzeugreifen (1) hergeleitet wird.

6. Verfahren nach Anspruch 5, **dadurch gekennzeichnet, dass** als mindestens eine analytische Kenngröße eine innerhalb eines Reifenlatschbereiches (L) maximale, negative Änderung (S₁) oder eine innerhalb des Reifenlatschbereiches (L) maximale, positive Änderung (S₂) der Radialbeschleunigung (aᵣ) über die Zeit (t) oder den durchlaufenen Abrollumfang oder den durchlaufenen Winkel des Messpunktes (MP) auf dem Fahrzeugreifen (1) hergeleitet wird.

7. Verfahren nach Anspruch 5 oder 6, **dadurch gekennzeichnet, dass** als mindestens eine analytische Kenngröße ein gewichteter Mittelwert aus einer innerhalb eines Reifenlatschbereiches (L) maximalen, negativen Änderung (S₁) und einer innerhalb eines Reifenlatschbereiches (L) maximalen, positiven Änderung (S₂) der Radialbeschleunigung (aᵣ) über die Zeit (t) oder den durchlaufenen Abrollumfang oder den durchlaufenen Winkel des Messpunktes (MP) auf dem Fahrzeugreifen (1) hergeleitet wird.

8. Verfahren nach einem der Ansprüche 5 bis 7, **dadurch gekennzeichnet, dass** zum Herleiten der mindestens einen analytischen Kenngröße aus der Änderung (S₁, S₂) der Radialbeschleunigung (aᵣ)
- aus der erfassten Radialbeschleunigung (aᵣ) eine Kennlinie (K₁, K₂) gebildet wird,
- auf der Kennlinie (K₁, K₂) mindestens ein Betrachtungspunkt (P_{A1}, P_{B1}) ausgewählt wird, und aus dem mindestens einen Betrachtungspunkt (P_{A1}, P_{B1}) die Änderung (S₁, S₂) der Radialbeschleunigung (aᵣ) hergeleitet wird.

9. Verfahren nach Anspruch 8, **dadurch gekennzeichnet, dass** zum Herleiten der Änderung (S₁, S₂) der Radialbeschleunigung (aᵣ) eine Ableitung (K₂) der durch die Radialbeschleunigung (aᵣ) über die Zeit (t) oder den durchlaufenen Abrollumfang oder den durchlaufenen Winkel des Messpunktes (MP) auf dem Fahrzeugreifen (1) gebildete Kennlinie (K₁) gebildet wird.

10. Verfahren nach einem der vorhergehenden Ansprüche, **dadurch gekennzeichnet, dass** die mindestens eine analytische Kenngröße aus einer Tangentialbeschleunigung (aₜ, a_{t,1}, a_{t,2}) am Messpunkt (MP) hergeleitet wird.

11. Verfahren nach Anspruch 10, **dadurch gekennzeichnet, dass** als mindestens eine analytische Kenngröße eine innerhalb eines Reifenlatschbereiches (L) maximale Tangentialbeschleunigung (a_{t,1}) oder eine innerhalb des Reifenlatschbereiches (L) minimale Tangentialbeschleunigung (a_{t,2}) hergeleitet wird, wobei die maximale und die minimale Tangentialbeschleunigung (a_{t,1}, a_{t,2}) aus einem über mehrere Reifenumdrehungen gewichtet gemittelten und/oder einem nach dem Prinzip des gleitenden Mittelwertes geglätteten Verlauf der erfassten Tangentialbeschleunigung (aₜ) bestimmt werden.

12. Verfahren nach Anspruch 10 oder 11, **dadurch gekennzeichnet, dass** als mindestens eine analytische Kenngröße ein gewichteter Mittelwert aus einer innerhalb des Reifenlatschbereiches (L) maximalen Tangentialbeschleunigung (a_{t,1}) und einer innerhalb des Reifenlatschbereiches (L) minimalen Tangentialbeschleunigung (aₜ₂) hergeleitet wird.

13. Verfahren nach einem der Ansprüche 10 bis 12, **dadurch gekennzeichnet, dass** zum Herleiten der mindestens einen analytischen Kenngröße aus der Tangentialbeschleunigung (aₜ, a_{t,1}, a_{t,2})
- aus der erfassten Tangentialbeschleunigung (at) eine Kennlinie (K₃) über die Zeit (t) oder den durchlaufenen Abrollumfang oder den durchlaufenen Winkel des Messpunktes (MP) auf dem Fahrzeugreifen (1) gebildet wird,
- auf der Kennlinie (K₃) mindestens ein Betrachtungspunkt (P_{A3}, P_{B3}) ausgewählt wird, und aus einem Ordinatenwert des mindestens einen Betrachtungspunktes (P_{A3}, P_{B3}) die Tangentialbeschleunigung (aₜ, a_{t,1}, a_{t,2}) bestimmt wird.

14. Verfahren nach einem der vorhergehenden Ansprüche, **dadurch gekennzeichnet, dass** als mindestens eine analytische Kenngröße ein zeitlicher Abstand oder ein Winkelabstand oder eine Wegdifferenz entlang des Abrollumfangs zwischen zwei Beschleunigungszuständen des Messpunktes (MP) aus der Radialbeschleunigung (aᵣ) hergeleitet wird, wobei die Radialbeschleunigung (aᵣ) an beiden Beschleunigungszuständen in etwa identisch ist und die Radialbeschleunigung (aᵣ) an beiden Beschleunigungszuständen einem Wert entspricht, der weniger als 25%, vorzugsweise 5%, oder mehr als 75%, vorzugsweise 100%, der innerhalb des Reifenlatschbereiches (L) maximalen Radialbeschleunigung (aᵣ) entspricht, wobei die maximale Radialbeschleunigung (aᵣ) aus einem über mehrere Reifenumdrehungen gewichtet gemittelten und/oder einem nach dem Prinzip des gleitenden Mittelwertes geglätteten Verlauf der erfassten Radialbeschleunigung (aᵣ) bestimmt wird.

15. Verfahren nach Anspruch 14, **dadurch gekennzeichnet, dass** zum Herleiten der mindestens einen analytischen Kenngröße aus dem zeitlichen Abstand oder dem Winkelabstand oder der Wegdifferenz entlang des Abrollumfangs
- aus der erfassten Radialbeschleunigung (aᵣ) eine Kennlinie (K₁) über die Zeit (t) oder den durchlaufenen Abrollumfang oder den durchlaufenen Winkel des Messpunktes (MP) auf dem Fahrzeugreifen (1) gebildet wird,
- auf der Kennlinie (K₁) zwei Betrachtungspunkte (P_{A2}, P_{B2}) ausgewählt werden, und aus einem Abszissenabstand der zwei Betrachtungspunkte (P_{A2}, P_{B2}) eine Peakbreite (B) eines Peaks (11) in der Kennlinie (K₁) hergeleitet wird,
wobei beide Betrachtungspunkte (P_{A2}, P_{B2}) denselben Ordinatenwert aufweisen und der Ordinatenwert der Betrachtungspunkte (P_{A2}, P_{B2}) einem Anteil an einer Peakhöhe (H) von weniger als 25%, vorzugsweise zwischen 5% und 10%, oder mehr als 75%, vorzugsweise 100%, entspricht.

16. Verfahren nach einem der vorhergehenden Ansprüche, **dadurch gekennzeichnet, dass** der Verlauf der erfassten Beschleunigung (a_{r,} aₜ) über mehrere Reifenumdrehungen gewichtet gemittelt wird und/oder eine Glättung des Verlaufes der erfassten Beschleunigung nach dem Prinzip des gleitenden Mittelwertes stattfindet.

17. Verfahren nach einem der vorhergehenden Ansprüche, **dadurch gekennzeichnet, dass** beim Bestimmen der Profiltiefe (D) ein Einfluss eines Reifendruckes (p) und/oder einer Reifentemperatur (T_{R}) und/oder einer Radlast (F_{z}) und/oder einer Radgeschwindigkeit (v_{R}) auf die erfasste Beschleunigung (a_{r,} aₜ) des Messpunktes (MP) kompensiert wird.

18. Steuergerät (4), das ausgebildet ist,
aus mindestens einer an das Steuergerät (4) übermittelten analytischen Kenngröße (S₁, S₂, a_{t,1}, a_{t,2}, B) in Abhängigkeit einer Kalibrier-Kurve (10a, 10b, 10c, 10d, 10e) eine Profiltiefe (D) des Fahrzeugreifens (1) zu bestimmen, wobei dazu auf dem Steuergerät (4) eine Zuordnung der hergeleiteten analytischen Kenngröße (S₁, S₂, a_{t,1}, a_{t,2}, B) zu einer Profiltiefe (D) über die Kalibrier-Kurve (10a, 10b, 10c, 10d, 10e) durchgeführt werden kann, **dadurch gekennzeichnet, dass**
zur Bestimmung der Profiltiefe (D) eine Kalibrier-Kurve (10a, 10b, 10c, 10d, 10e) verwendet wird, die innerhalb eines linearen Toleranzbandes (F_{Ta}, F_{Tb}, F_{Tc}, F_{Td}, F_{Te}) verläuft, wobei das Toleranzband (F_{Ta}, F_{Tb}, F_{Tc}, F_{Td}, F_{Te}) mit einer Abweichung von weniger als 15% um eine lineare Annäherung der Kalibrier-Kurve (10a, 10b, 10c, 10d, 10e) verläuft,
wobei eine monotone Kalibrier-Kurve (10a, 10b, 10c, 10d, 10e) verwendet wird, die linear verläuft, wobei die Profiltiefe (D) aus einer Multiplikation der mindestens einen analytischen Kenngröße (S₁, S₂, a_{t,1}, a_{t,2}, B) mit einer Steigung (Fₐ, F_{b}, F_{c}, F_{d}, Fₑ) der Kalibrier-Kurve (10a, 10b, 10c, 10d, 10e) unter Berücksichtigung einer reifencharakteristischen Konstante (Cₐ, C_{b}, C_{c}, C_{d}, Cₑ) bestimmt wird.

## Claims

1. Method for determining a profile depth (D) of a tyre profile, having at least the following steps:
a) detecting an acceleration (a_{r,} aₜ) of a measurement point (MP) on a tyre inner side (2) of a vehicle tyre (1), wherein a deviation, caused by contact of the vehicle tyre (1) with a roadway (8), of the acceleration (a_{r,} aₜ) of the measurement point (MP) within an observation window (5) is detected,
b) deriving at least one analytical characteristic variable (S₁, S₂, a_{t,1}, a_{t,2}, B) which is characteristic of the profile of the detected acceleration (a_{r,} aₜ), wherein the at least one analytical characteristic variable (S₁, S₂, a_{t,1}, a_{t,2}, B) characterizes the non-periodic profile of the detected acceleration (a_{r,} aₜ) within one tyre rotation,
c) determining the profile depth (D) in a manner dependent on the at least one analytical characteristic variable (S₁, S₂, a_{t,1}, a_{t,2}, B), wherein a calibration curve (10a, 10b, 10c, 10d, 10e) yields the dependency between the analytical characteristic variable (S₁, S₂, a_{t,1}, a_{t,2}, B) and the profile depth (D), and the calibration curve (10a, 10b, 10c, 10d, 10e) assigns a profile depth (D) to the derived analytical characteristic variable (S₁, S₂, a_{t,1}, a_{t,2}, B),
**characterized in that**,
for the determination of the profile depth (D), a calibration curve (10a, 10b, 10c, 10d, 10e) is used which runs within a linear tolerance band (F_{Ta}, F_{Tb}, F_{Tc}, F_{Td}, F_{Te}), wherein the tolerance band (F_{Ta}, F_{Tb}, F_{Tc}, F_{Td}, F_{Te}) runs with a deviation of less than 15% around a linear approximation to the calibration curve (10a, 10b, 10c, 10d, 10e),
wherein a monotonous calibration curve (10a, 10b, 10c, 10d, 10e) is used which runs linearly, wherein the profile depth (D) is determined from a multiplication of the at least one analytical characteristic variable (S₁, S₂, a_{t,1}, a_{t,2}, B) by a gradient (Fₐ, F_{b}, F_{c}, F_{d}, Fₑ) of the calibration curve (10a, 10b, 10c, 10d, 10e) taking into consideration a tyre characteristic constant (Cₐ, C_{b}, C_{c}, C_{d}, Cₑ).

2. Method according to Claim 1, **characterized in that**, for the determination of the profile depth (D), a calibration curve (10a, 10b, 10c, 10d, 10e) is used which maps the analytical characteristic variable (S₁, S₂, a_{t,1}, a_{t,2}, B) uniquely onto the profile depth (D), such that each value of the at least one analytical characteristic variable (S₁, S₂, a_{t,1}, a_{t,2}, B) is assigned exactly one value of the profile depth (D).

3. Method according to Claim 1 or 2, **characterized in that**, for the determination of the profile depth (D), a calibration curve (10a, 10b, 10c, 10d, 10e) is used which runs within a linear tolerance band (F_{Ta}, F_{Tb}, F_{Tc}, F_{Td}, F_{Te}), wherein the tolerance band (F_{Ta}, F_{Tb}, F_{Tc}, F_{Td}, F_{Te}) runs with a deviation of less than 5% around a linear approximation to the calibration curve (10a, 10b, 10c, 10d, 10e).

4. Method according to one of the preceding claims, **characterized in that** each analytical characteristic variable (S₁, S₂, a_{t,1}, a_{t,2}, B) is assigned in each case one calibration curve (10a, 10b, 10c, 10d, 10e).

5. Method according to one of the preceding claims, **characterized in that** the at least one analytical characteristic variable is derived from a change (S₁, S₂) in a radial acceleration (aᵣ) versus a time (t) or the traversed rolling circumference or a traversed angle of the measurement point (MP) on the vehicle tyre (1).

6. Method according to Claim 5, **characterized in that**, as at least one analytical characteristic variable, a maximum negative change (S₁) within a tyre contact patch region (L), or a maximum positive change (S₂) within the tyre contact patch region (L), of the radial acceleration (aᵣ) versus the time (t) or the traversed rolling circumference or the traversed angle of the measurement point (MP) on the vehicle tyre (1) is derived.

7. Method according to Claim 5 or 6, **characterized in that**, as at least one analytical characteristic variable, a weighted average value of a maximum negative change (S₁) within a tyre contact patch region (L), and a maximum positive change (S₂) within a tyre contact patch region (L), of the radial acceleration (aᵣ) versus the time (t) or the traversed rolling circumference or the traversed angle of the measurement point (MP) on the vehicle tyre (1) is derived.

8. Method according to one of Claims 5 to 7, **characterized in that**, for the derivation of the at least one analytical characteristic variable from the change (S₁, S₂) of the radial acceleration (aᵣ),
- a characteristic curve (K₁, K₂) is formed from the detected radial acceleration (aᵣ),
- at least one observation point (P_{A1}, P_{B1}) is selected on the characteristic curve (K₁, K₂), and the change (S₁, S₂) of the radial acceleration (aᵣ) is derived from the at least one observation point (P_{A1}, P_{B1}).

9. Method according to Claim 8, **characterized in that**, for the derivation of the change (S₁, S₂) of the radial acceleration (aᵣ), a derivative (K₂) of the characteristic curve (K₁) formed by the radial acceleration (aᵣ) versus the time (t) or the traversed rolling circumference or the traversed angle of the measurement point (MP) on the vehicle tyre (1) is formed.

10. Method according to one of the preceding claims, **characterized in that** the at least one analytical characteristic variable is derived from a tangential acceleration (aₜ, a_{t,1}, at,2) at the measurement point (MP).

11. Method according to Claim 10, **characterized in that**, as at least one analytical characteristic variable, a maximum tangential acceleration (a_{t,1}) within a tyre contact patch region (L) or a minimum tangential acceleration (a_{t,2}) within the tyre contact patch region (L) is derived, wherein the maximum and the minimum tangential acceleration (a_{t,1}, a_{t,2}) are determined from a profile averaged in weighted fashion over multiple tyre rotations, and/or from a profile smoothed in accordance with the floating mean value principle, of the detected tangential acceleration (aₜ).

12. Method according to Claim 10 or 11, **characterized in that**, as at least one analytical characteristic variable, a weighted average value of a maximum tangential acceleration (a_{t,1}) within the tyre contact patch region (L) and a minimum tangential acceleration (a_{t,2}) within the tyre contact patch region (L) is derived.

13. Method according to one of Claims 10 to 12, **characterized in that**, for the derivation of the at least one analytical characteristic variable from the tangential acceleration (aₜ, a_{t,1}, a_{t,2}),
- a characteristic curve (K₃) versus the time (t) or the traversed rolling circumference or the traversed angle of the measurement point (MP) on the vehicle tyre (1) is formed from the detected tangential acceleration (aₜ),
- at least one observation point (P_{A3}, P_{B3}) is selected on the characteristic curve (K₃), and the tangential acceleration (aₜ, a_{t,1}, a_{t,2}) is determined from an ordinate value of the at least one observation point (P_{A3}, P_{B3}).

14. Method according to one of the preceding claims, **characterized in that**, as at least one analytical characteristic variable, a time interval or an angular interval or a distance difference along the rolling circumference between two acceleration states of the measurement point (MP) is derived from the radial acceleration (aᵣ), wherein the radial acceleration (aᵣ) in both acceleration states is approximately identical, and the radial acceleration (aᵣ) in both acceleration states corresponds to a value which is less than 25%, preferably 5%, or more than 75%, preferably 100%, of the maximum radial acceleration (aᵣ) within the tyre contact patch region (L), wherein the maximum radial acceleration (aᵣ) is determined from a profile averaged in weighted fashion over multiple tyre rotations, and/or from a profile smoothed in accordance with the floating mean value principle, of the detected radial acceleration (aᵣ).

15. Method according to Claim 14, **characterized in that**, for the derivation of the at least one analytical characteristic variable from the time interval or the angular interval or the distance difference along the rolling circumference,
- a characteristic curve (K₁) versus the time (t) or the traversed rolling circumference or the traversed angle of the measurement point (MP) on the vehicle tyre (1) is formed from the detected radial acceleration (aᵣ),
- two observation points (P_{A2}, P_{B2}) are selected on the characteristic curve (K₁),
and a peak width (B) of a peak (11) in the characteristic curve (K₁) is derived from an abscissa spacing of the two observation points (P_{A2}, P_{B2}),
wherein the two observation points (P_{A2}, P_{B2}) have the same ordinate value, and the ordinate value of the observation points (P_{A2}, P_{B2}) corresponds to a component of a peak height (H) of less than 25%, preferably of between 5% and 10%, or of more than 75%, preferably 100%.

16. Method according to one of the preceding claims, **characterized in that** the profile of the detected acceleration (a_{r,} aₜ) is averaged in weighted fashion over multiple tyre rotations, and/or smoothing of the profile of the detected acceleration is performed in accordance with the floating mean value principle.

17. Method according to one of the preceding claims, **characterized in that**, in the determination of the profile depth (D), an influence of a tyre pressure (p) and/or of a tyre temperature (T_{R}) and/or of a wheel load (F_{z}) and/or of a wheel speed (v_{R}) on the detected acceleration (a_{r,} aₜ) of the measurement point (MP) is compensated.

18. Control unit (4), which is designed
to determine a profile depth (D) of the vehicle tyre (1) from at least one analytical characteristic variable (S₁, S₂, a_{t,1}, a_{t,2}, B), transmitted to the control unit (4), in a manner dependent on a calibration curve (10a, 10b, 10c, 10d, 10e), wherein, for this purpose, on the control unit (4), an assignment of the derived analytical characteristic variable (S₁, S₂, a_{t,1}, a_{t,2}, B) to a profile depth (D) can be performed by means of the calibration curve (10a, 10b, 10c, 10d, 10e), **characterized in that**, for the determination of the profile depth (D), a calibration curve (10a, 10b, 10c, 10d, 10e) is used which runs within a linear tolerance band (F_{Ta}, F_{Tb}, F_{Tc}, F_{Td}, F_{Te}), wherein the tolerance band (F_{Ta}, F_{Tb}, F_{Tc}, F_{Td}, F_{Te}) runs with a deviation of less than 15% around a linear approximation to the calibration curve (10a, 10b, 10c, 10d, 10e),
wherein a monotonous calibration curve (10a, 10b, 10c, 10d, 10e) is used which runs linearly, wherein the profile depth (D) is determined from a multiplication of the at least one analytical characteristic variable (S₁, S₂, a_{t,1}, a_{t,2}, B) by a gradient (Fₐ, F_{b}, F_{c}, F_{d}, Fₑ) of the calibration curve (10a, 10b, 10c, 10d, 10e) taking into consideration a tyre characteristic constant (Cₐ, C_{b}, C_{c}, C_{d}, Cₑ).

## Revendications

1. Procédé permettant de déterminer une profondeur de sculpture (D) d'une sculpture de pneumatique, comprenant au moins les étapes suivantes consistant à :
a) détecter une accélération (a_{r,} aₜ) d'un point de mesure (MP) sur une face intérieure de pneumatique (2) d'un pneumatique de véhicule (1), un écart de l'accélération (a_{r,} aₜ) du point de mesure (MP), provoqué par un contact du pneumatique de véhicule (1) avec une chaussée (8), étant détecté à l'intérieur d'une fenêtre d'observation (5),
b) déduire au moins une grandeur caractéristique analytique (S₁, S₂, a_{t,1}, a_{t,2}, B) caractérisant l'évolution de l'accélération (a_{r,} aₜ) détectée, ladite au moins une grandeur caractéristique analytique (S₁, S₂, a_{t,1}, a_{t,2}, B) caractérisant l'évolution, non périodique à l'intérieur d'un tour de pneumatique, de l'accélération (a_{r,} aₜ) détectée,
c) déterminer la profondeur de sculpture (D) en fonction de ladite au moins une grandeur caractéristique analytique (S₁, S₂, a_{t,1}, a_{t,2}, B), la dépendance entre la grandeur caractéristique analytique (S₁, S₂, a_{t,1}, a_{t,2}, B) et la profondeur de sculpture (D) résultant d'une courbe d'étalonnage (10a, 10b, 10c, 10d, 10e), et la courbe d'étalonnage (10a, 10b, 10c, 10d, 10e) associant une profondeur de sculpture (D) à la grandeur caractéristique analytique (S₁, S₂, a_{t,1}, a_{t,2}, B) déduite, **caractérisé en ce que** pour la détermination de la profondeur de sculpture (D), une courbe d'étalonnage (10a, 10b, 10c, 10d, 10e) est utilisée qui s'étend à l'intérieur d'une bande de tolérance linéaire (F_{Ta}, F_{Tb}, F_{Tc}, F_{Td}, F_{Te}), la bande de tolérance (F_{Ta}, F_{Tb}, F_{Tc}, F_{Td}, F_{Te}) s'étendant avec un écart de moins de 15 % autour d'une approximation linéaire de la courbe d'étalonnage (10a, 10b, 10c, 10d, 10e),
une courbe d'étalonnage (10a, 10b, 10c, 10d, 10e) monotone étant utilisée qui s'étend de manière linéaire, la profondeur de sculpture (D) étant déterminée à partir d'une multiplication de ladite au moins une grandeur caractéristique analytique (S₁, S₂, a_{t,1}, a_{t,2}, B) par une pente (Fₐ, F_{b}, F_{c}, F_{d}, Fₑ) de la courbe d'étalonnage (10a, 10b, 10c, 10d, 10e) en tenant compte d'une constante caractéristique d'un pneumatique (Cₐ, C_{b}, C_{c}, C_{d}, Cₑ).

2. Procédé selon la revendication 1, **caractérisé en ce que** pour la détermination de la profondeur de sculpture (D), une courbe d'étalonnage (10a, 10b, 10c, 10d, 10e) est utilisée qui représente la grandeur caractéristique analytique (S₁, S₂, a_{t,1}, a_{t,2}, B) de manière univoque sur la profondeur de sculpture (D) de sorte qu'exactement une valeur de la profondeur de sculpture (D) est associée à chaque valeur de ladite au moins une grandeur caractéristique analytique (S₁, S₂, a_{t,1}, a_{t,2}, B).

3. Procédé selon la revendication 1 ou 2, **caractérisé en ce que** pour la détermination de la profondeur de sculpture (D), une courbe d'étalonnage (10a, 10b, 10c, 10d, 10e) est utilisée qui s'étend à l'intérieur d'une bande de tolérance linéaire (F_{Ta}, F_{Tb}, F_{Tc}, F_{Td}, F_{Te}), la bande de tolérance (F_{Ta}, F_{Tb}, F_{Tc}, F_{Td}, F_{Te}) s'étendant avec un écart de moins de 5 % autour d'une approximation linéaire de la courbe d'étalonnage (10a, 10b, 10c, 10d, 10e).

4. Procédé selon l'une quelconque des revendications précédentes, **caractérisé en ce que** respectivement une courbe d'étalonnage (10a, 10b, 10c, 10d, 10e) est associée à chaque grandeur caractéristique analytique (S₁, S₂, a_{t,1}, a_{t,2}, B).

5. Procédé selon l'une quelconque des revendications précédentes, **caractérisé en ce que** ladite au moins une grandeur caractéristique analytique est déduite à partir d'une variation (S₁, S₂) d'une accélération radiale (aᵣ) pendant une période (t) ou sur la circonférence de roulement continue ou sur un angle continu du point de mesure (MP) sur le pneumatique de véhicule (1).

6. Procédé selon la revendication 5, **caractérisé en ce que** comme au moins une grandeur caractéristique analytique, une variation négative (S₁), maximale à l'intérieur d'une plage d'aplatissement de pneumatique (L), ou une variation positive (S₂), maximale à l'intérieur de la plage d'aplatissement de pneumatique (L), de l'accélération radiale (aᵣ) pendant la période (t) ou sur la circonférence de roulement continue ou sur l'angle continu du point de mesure (MP) sur le pneumatique de véhicule (1) est déduite.

7. Procédé selon la revendication 5 ou 6, **caractérisé en ce que** comme au moins une grandeur caractéristique analytique, une moyenne pondérée est déduite à partir d'une variation négative (S₁), maximale à l'intérieur d'une plage d'aplatissement de pneumatique (L), et d'une variation positive (S2), maximale à l'intérieur d'une plage d'aplatissement de pneumatique (L), de l'accélération radiale (aᵣ) pendant la période (t) ou sur la circonférence de roulement continue ou sur l'angle continu du point de mesure (MP) sur le pneumatique de véhicule (1).

8. Procédé selon l'une quelconque des revendications 5 à 7, **caractérisé en ce que** pour la déduction de ladite au moins une grandeur caractéristique analytique à partir de la variation (S₁, S₂) de l'accélération radiale (aᵣ)
- une courbe caractéristique (K₁, K₂) est formée à partir de l'accélération radiale (aᵣ) détectée,
- sur la courbe caractéristique (K₁, K₂), au moins un point d'observation (P_{A1}, P_{B1}) est sélectionné, et la variation (S₁, S₂) de l'accélération radiale (aᵣ) est déduite à partir du au moins un point d'observation (P_{A1}, P_{B1}).

9. Procédé selon la revendication 8, **caractérisé en ce que** pour la déduction de la variation (S₁, S₂) de l'accélération radiale (aᵣ), une dérivation (K₂) de la courbe caractéristique (K₁), formée par l'accélération radiale (aᵣ) pendant le période (t) ou sur la circonférence de roulement continue ou sur l'angle continu du point de mesure (MP) sur le pneumatique de véhicule (1), est formée.

10. Procédé selon l'une quelconque des revendications précédentes, **caractérisé en ce que** ladite au moins une grandeur caractéristique analytique est déduite à partir d'une accélération tangentielle (at, a_{t,1}, a_{t,2}) au point de mesure (MP).

11. Procédé selon la revendication 10, **caractérisé en ce que** comme au moins une grandeur caractéristique analytique, une accélération tangentielle (a_{t,1}), maximale à l'intérieur d'une plage d'aplatissement de pneumatique (L), ou une accélération tangentielle (a_{t,2}), minimale à l'intérieur de la plage d'aplatissement de pneumatique (L), est déduite, les accélérations tangentielles maximale et minimale (a_{t,1}, a_{t,2}) étant déterminées à partir d'une évolution moyennée de manière pondérée sur plusieurs tours de pneumatique et/ou une évolution lissée selon le principe de la moyenne mobile de l'accélération tangentielle (aₜ) détectée.

12. Procédé selon la revendication 10 ou 11, **caractérisé en ce que** comme au moins une grandeur caractéristique analytique, une moyenne pondérée est déduite à partir d'une accélération tangentielle (a_{t,1}), maximale à l'intérieur de la plage d'aplatissement de pneumatique (L), et d'une accélération tangentielle (a_{t,2}), minimale à l'intérieur de la plage d'aplatissement de pneumatique (L).

13. Procédé selon l'une quelconque des revendications 10 à 12, **caractérisé en ce que** pour la déduction de ladite au moins une grandeur caractéristique analytique à partir de l'accélération tangentielle (aₜ, a_{t,1}, a_{t,2})
- une courbe caractéristique (K₃) pendant la période (t) ou sur la circonférence de roulement continue ou sur l'angle continu du point de mesure (MP) sur le pneumatique de véhicule (1) est formée à partir de l'accélération tangentielle (aₜ) détectée,
- au moins un point d'observation (P_{A3}, P_{B3}) est sélectionné sur la courbe caractéristique (K₃), et l'accélération tangentielle (aₜ, a_{t,1}, a_{t,2}) est déterminée à partir d'une valeur d'ordonnée du au moins un point d'observation (P_{A3}, P_{B3}).

14. Procédé selon l'une quelconque des revendications précédentes, **caractérisé en ce que** comme au moins une grandeur caractéristique analytique, une distance temporelle ou une distance angulaire ou une différence de trajet le long de la circonférence de roulement entre deux états d'accélération du point de mesure (MP) est déduite à partir de l'accélération radiale (aᵣ), l'accélération radiale (aᵣ) étant approximativement identique dans les deux états d'accélération, et l'accélération radiale (aᵣ) dans les deux états d'accélération correspondant à une valeur qui est inférieure à 25%, de préférence à 5% ou supérieure à 75%, de préférence à 100%, de l'accélération radiale (aᵣ) maximale à l'intérieur de la plage d'aplatissement de pneumatique (L), l'accélération radiale (aᵣ) maximale étant déterminée à partir d'une évolution moyennée de manière pondérée sur plusieurs tours de pneumatique et/ou d'une évolution lissée selon le principe de la moyenne mobile de l'accélération radiale (aᵣ) détectée.

15. Procédé selon la revendication 14, **caractérisé en ce que** pour la déduction de ladite au moins une grandeur caractéristique analytique à partir de la distance temporelle ou de la distance angulaire ou de la différence de trajet le long de la circonférence de roulement
- une courbe caractéristique (K₁) pendant la période (t) ou sur la circonférence de roulement continue ou sur l'angle continu du point de mesure (MP) sur le pneumatique de véhicule (1) est formée à partir de l'accélération radiale détectée (aᵣ),
- deux points d'observation (P_{A2}, P_{B2}) sont sélectionnés sur la courbe caractéristique (K₁), et une largeur de pic (B) d'un pic (11) sur la courbe caractéristique (K₁) est déduite à partir d'une distance d'abscisse des deux points d'observation (P_{A2}, P_{B2}),
les deux points d'observation (P_{A2}, P_{B2}) présentant la même valeur d'ordonnée, et la valeur d'ordonnée des points d'observation (P_{A2}, P_{B2}) correspondant à une part au niveau d'une hauteur de pic (H) de moins de 25 %, de préférence comprise entre 5 % et 10 %, ou de plus de 75 %, de préférence de 100 %.

16. Procédé selon l'une quelconque des revendications précédentes, **caractérisé en ce que** l'évolution de l'accélération (a_{r,} aₜ) détectée est moyennée sur plusieurs tours de pneumatique et/ou un lissage de l'évolution de l'accélération détectée a lieu selon le principe de la moyenne mobile.

17. Procédé selon l'une quelconque des revendications précédentes, **caractérisé en ce que** lors de la détermination de la profondeur de sculpture (D), une influence d'une pression de gonflage (p) et/ou d'une température de pneumatique (T_{R}) et/ou d'une charge de roue (F_{z}) et/ou d'une vitesse de roue (v_{R}) sur l'accélération (a_{r,} aₜ) détectée du point de mesure (MP) est compensée.

18. Appareil de commande (4), qui est réalisé pour déterminer à partir d'au moins une grandeur caractéristique analytique (S₁, S₂, a_{t,1}, a_{t,2}, B), transmise à l'appareil de commande (4), en fonction d'une courbe d'étalonnage (10a, 10b, 10c, 10d, 10e), une profondeur de sculpture (D) du pneumatique de véhicule (1), dans lequel, sur l'appareil de commande (4), une association de la grandeur caractéristique analytique (S₁, S₂, a_{t,1}, a_{t,2}, B) déduite à une profondeur de sculpture (D) peut être effectuée par l'intermédiaire de la courbe d'étalonnage (10a, 10b, 10c, 10d, 10e),
**caractérisé en ce que** pour la détermination de la profondeur de sculpture (D), une courbe d'étalonnage (10a, 10b, 10c, 10d, 10e) est utilisée qui s'étend à l'intérieur d'une bande de tolérance linéaire (F_{Ta}, F_{Tb}, F_{Tc}, F_{Td}, F_{Te}), la bande de tolérance (F_{Ta}, F_{Tb}, F_{Tc}, F_{Td}, F_{Te}) s'étendant avec un écart de moins de 15 % autour d'une approximation linéaire de la courbe d'étalonnage (10a, 10b, 10c, 10d, 10e),
une courbe d'étalonnage (10a, 10b, 10c, 10d, 10e) monotone étant utilisée qui s'étend de manière linéaire, la profondeur de sculpture (D) étant déterminée à partir d'une multiplication de ladite au moins une grandeur caractéristique analytique (S₁, S₂, a_{t,1}, a_{t,2}, B) par une pente (Fₐ, F_{b}, F_{c}, F_{d}, Fₑ) de la courbe d'étalonnage (10a, 10b, 10c, 10d, 10e) en tenant compte d'une constante caractéristique d'un pneumatique (Cₐ, C_{b}, C_{c}, C_{d}, Cₑ).
